# DEMANDE DE BREVET EUROPEEN

(11) **EP 1 548 308 A1**
(43) Date de publication de la demande: **29.06.2005**
(21) Numéro de dépôt: 03447302.5
(22) Date de dépôt: 22.12.2003
(51) Int. Cl.: F16D 1/108

(54) **Liaison rigide arbre-moyeu**

(71) Demandeur: Techspace Aero S.A., 4041 Herstal (Milmort) (BE)
(72) Inventeur: Defloo, Yves, 4671 Saive (BE)
(74) Mandataire: Van Malderen, Michel

(57) **Abrégé**

La présente invention se rapporte à un dispositif d'accouplement rigide entre un arbre moteur (1) et un moyeu (2), caractérisé en ce qu'une extrémité de l'arbre (11) comporte une portée cylindrique externe emboîtable dans un premier alésage axial (21) correspondant dans une pièce réceptrice essentiellement cylindrique du moyeu (2), l'assemblage étant localisé grâce à un tenon (12) usiné sur ladite extrémité de l'arbre (11) et à une mortaise (22) usinée dans le fond dudit premier alésage du moyeu (21), ou inversement.

## Description

### Objet de l'invention

La présente invention se rapporte à une nouvelle liaison rigide entre un arbre et un moyeu. Cette liaison doit permettre la transmission régulière d'un mouvement de rotation et d'un couple.

La présente invention s'applique à tous les domaines techniques nécessitant un dispositif de transmission d'un mouvement rotatif avec couple d'entraînement.

### Etat de la technique

On connaît un certain nombre de solutions permettant d'accoupler de manière rigide un arbre moteur rotatif à un organe de machine, appelé moyeu, tel qu'une poulie, un pignon, une roue, etc.

Ces solutions nécessitent de réaliser un arrêt en rotation et/ou en translation et requièrent généralement la présence de pièces intermédiaires supplémentaires telles que cales, clavettes, croisillons, crabots, goupilles, vis de pression, circlips, etc.

Au minimum, la liaison est réalisée en trois éléments, comme par exemple un axe, une cale et un moyeu. Un autre exemple, connu dans l'état de la technique, est celui où on a deux demi-coquilles serrées autour d'un arbre, de manière rigide. Ce dispositif présente un nombre important de pièces, y compris les vis de serrage, est encombrant et, en cas de rotation rapide, nécessite un équilibrage.

La présence de cette ou ces pièces intermédiaires nécessite des usinages complémentaires, tels que par exemple une rainure (clavette, vis de pression), alésage (goupille), gorge (circlips), etc. Ces usinages augmentent la complexité et le coût de la liaison arbre-moyeu.

Le document EP-A-0 794 337 décrit une liaison entre un arbre et un moyeu pour la transmission d'un mouvement rotatif, au moyen d'une saillie usinée latéralement dans l'extrémité de l'arbre qui vient s'insérer dans une fente usinée dans la surface interne du moyeu. Un usinage axial et d'extrémité en tenon et mortaise est prévu pour assurer un accouplement angulaire de sécurité de l'arbre et du moyeu en mode de fonctionnement dégradé de la liaison, en cas de rupture des autres pièces d'entraînement de l'attache. L'usinage de la mortaise dans la partie réceptrice est très complexe car il est effectué axialement par l'intérieur de la pièce. De plus, ce système de secours ne permet pas de transmettre un couple élevé avec précision et de manière continue.

Le document US-A-4,711,528 décrit un accouplement par tenon et mortaise pour la transmission d'un mouvement rotatif. Cependant, l'ensemble n'est ni auto-centré, ni auto-supporté et est maintenu par des éléments extérieurs tels qu'un ressort.

### Buts de l'invention

La présente invention vise à fournir une solution qui permette de s'affranchir des inconvénients de l'état de la technique.

En particulier, l'invention vise à la suppression de la ou des pièces intermédiaires nécessaires dans les liaisons arbre moteur-moyeu de l'état de la technique.

### Principaux éléments caractéristiques de l'invention

La présente invention se rapporte à un dispositif d'accouplement rigide entre un arbre moteur et un moyeu, caractérisé en ce qu'une extrémité de l'arbre comporte une portée cylindrique externe emboîtable dans un premier alésage axial correspondant dans une pièce réceptrice essentiellement cylindrique du moyeu, l'assemblage étant localisé grâce à un tenon usiné sur ladite extrémité de l'arbre et à une mortaise usinée dans le fond dudit premier alésage du moyeu, ou inversement.

De manière avantageuse, la mortaise est obtenue par usinage radial à partir de la surface latérale externe de la pièce réceptrice du moyeu.

Toujours selon le dispositif d'accouplement de l'invention :
- la pièce réceptrice du moyeu présente un second alésage axial débouchant au niveau de la mortaise ;
- l'arbre moteur présente un alésage borgne axial à son extrémité de portée cylindrique, ledit alésage débouchant à hauteur du tenon ;
- le second alésage du moyeu et l'alésage borgne de l'axe étant exactement alignés, lorsque la liaison arbre-moyeu est localisée, une tige de fixation, par exemple une tige filetée vissée, introduite dans les deux alésages précités, assure le blocage axial de la liaison axe-moyeu.

Le dispositif d'accouplement rigide de l'invention permet avantageusement la transmission de couples compris entre 0 et 1000 Nm, de préférence entre 0,1 et 100 Nm.

### Brève description des figures

La figure 1 représente une vue en perspective de l'arbre (moteur) selon la présente invention.

La figure 2 représente une vue en perspective de la pièce réceptrice de l'arbre (moyeu), selon la présente invention.

La figure 3 représente une vue en perspective et en coupe axiale de la pièce de la figure 2.

La figure 4 représente une vue en perspective de l'arbre et de la pièce réceptrice assemblés.

La figure 5 représente une vue en perspective et en coupe de l'assemblage de la figure 4.

Les éléments identiques ou similaires sont représentés dans les figures par des repères de référence identiques ou similaires.

### Description d'une forme d'exécution préférée de l'invention

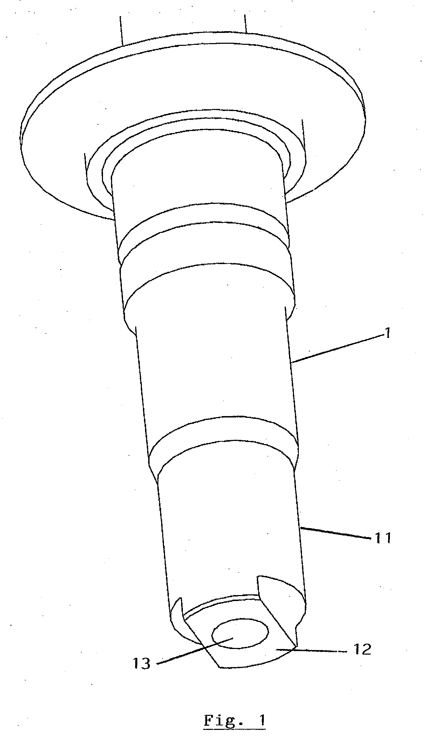

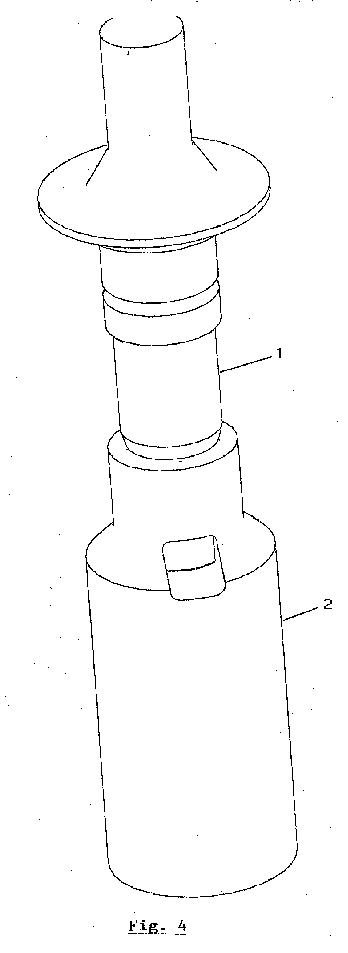

Le principe à la base de l'invention repose sur la solidarisation de l'axe et du moyeu au moyen d'un emboîtement direct de ceux-ci l'un dans l'autre et d'un assemblage à tenon et mortaise, qui empêche un mouvement relatif de rotation entre les deux pièces (Figures 1 à 5). Ce dispositif permet d'éliminer la pièce intermédiaire telle qu'une cale généralement présente.

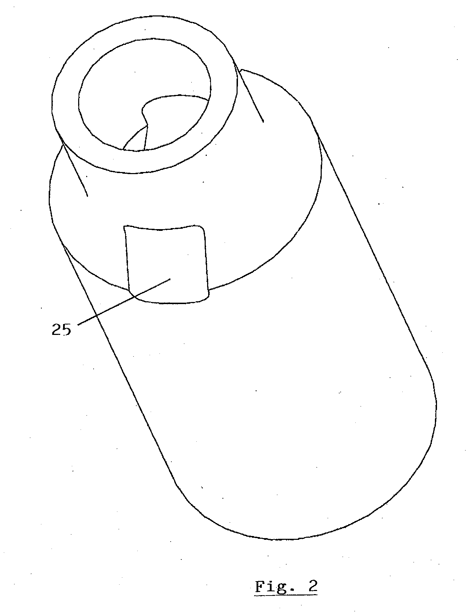

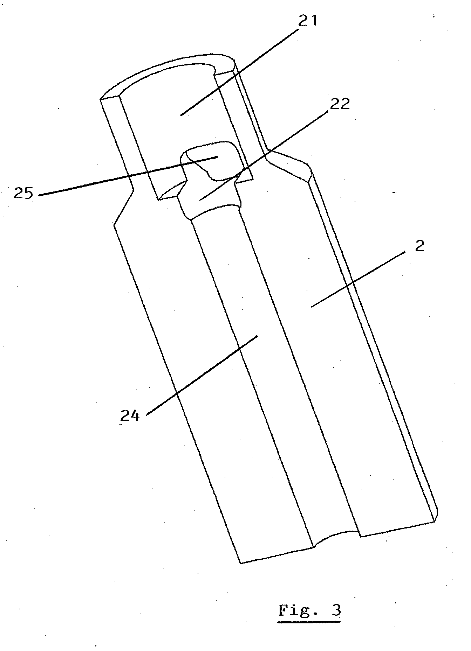

L'arbre moteur 1 représenté à la figure 1 présente une portée cylindrique 11 terminée par un tenon 12. La pièce réceptrice faisant office de moyeu 2, représentée sur les figures 2 et 3, comporte un alésage borgne 21, destiné à accueillir la portée cylindrique de l'arbre et au fond duquel est usinée une mortaise 22.

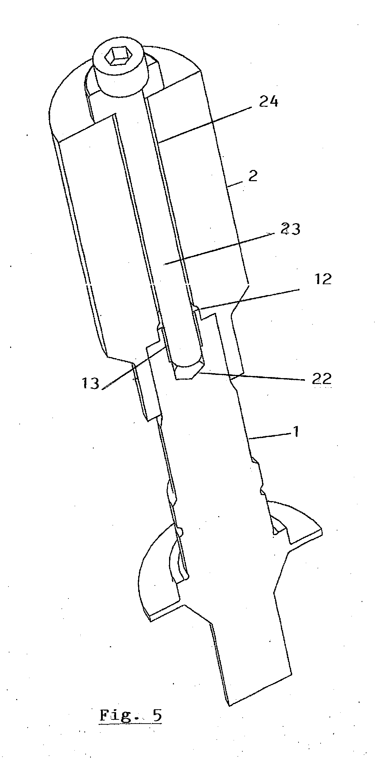

La solidarisation finale de l'assemblage empêche un mouvement relatif de translation entre les deux pièces. Comme illustré à la figure 5, la pièce réceptrice 2 présente un alésage axial 24 débouchant au niveau de la mortaise 22. De même, l'arbre moteur 1 présente un alésage borgne 13 à son extrémité de portée cylindrique 11, ledit alésage débouchant à hauteur du tenon 12. Par construction, lorsque la liaison arbre-moyeu est réalisée, les deux alésages 13, 24 sont exactement alignés. La solidarisation peut alors être effectuée au moyen d'une tige de fixation 23, par exemple une tige filetée vissée, introduite dans les deux alésages 13, 24.

Outre l'avantage de permettre la suppression d'une pièce intermédiaire entre l'arbre moteur et le moyeu, la présente invention présente l'avantage que la mortaise 22 est facile à usiner dans la pièce réceptrice 2. En effet, un usinage radial 25 peut être réalisé (Figures 2 et 3).

La liaison rigide de l'invention peut convenir dans une très large gamme de températures. En effet, si le moyeu et l'arbre sont réalisés dans le même acier par exemple, il n'y a aucun problème de dilatation différentielle.

Le couple à transmettre peut être typiquement de l'ordre de 10 Nm.

## Revendications

1. Dispositif d'accouplement rigide entre un arbre moteur (1) et un moyeu (2), **caractérisé en ce qu'**une extrémité de l'arbre (11) comporte une portée cylindrique externe emboîtable dans un premier alésage axial (21) correspondant dans une pièce réceptrice essentiellement cylindrique du moyeu (2), l'assemblage étant localisé grâce à un tenon (12) usiné sur ladite extrémité de l'arbre (11) et à une mortaise (22) usinée dans le fond dudit premier alésage du moyeu (21), ou inversement.

2. Dispositif selon la revendication 1, **caractérisé en ce que** la mortaise (22) est obtenue par usinage radial (25) à partir de la surface latérale externe de la pièce réceptrice du moyeu (2).

3. Dispositif selon la revendication 1 ou 2, **caractérisé en ce que** :
- la pièce réceptrice du moyeu (2) présente un second alésage axial (24) débouchant au niveau de la mortaise (22) ;
- l'arbre moteur (1) présente un alésage borgne axial (13) à son extrémité de portée cylindrique (11), ledit alésage débouchant à hauteur du tenon (12) ;
- le second alésage du moyeu (24) et l'alésage borgne de l'axe (13) étant exactement alignés, lorsque la liaison arbre-moyeu est localisée, une tige de fixation (23), par exemple une tige filetée vissée, introduite dans les deux alésages précités (13, 24), assure le blocage axial de la liaison axe-moyeu.

4. Dispositif selon l'une quelconque des revendications 1, 2 ou 3, **caractérisé en ce que** le couple transmis est compris entre 0 et 1000 Nm, de préférence entre 0,1 et 100 Nm.

## Revendications modifiées

### Revendications modifiées conformément à la règle 86(2) CBE.

**1.** Dispositif d'accouplement rigide entre un arbre moteur (1) et un moyeu (2), une extrémité (11) de l'arbre comportant une portée cylindrique externe emboîtable dans un premier alésage axial (21) correspondant dans une pièce réceptrice essentiellement cylindrique du moyeu (2), l'assemblage étant localisé grâce à un tenon (12) usiné sur ladite extrémité de l'arbre (11) et à une mortaise (22) usinée dans le fond dudit premier alésage du moyeu (21), ou inversement, **caractérisé en ce que** la mortaise (22) est obtenue par usinage radial (25) à partir de la surface latérale externe de la pièce réceptrice du moyeu (2).

**2.** Dispositif selon la revendication 1, **caractérisé en ce que** :
- la pièce réceptrice du moyeu (2) présente un second alésage axial (24) débouchant au niveau de la mortaise (22) ;
- l'arbre moteur (1) présente un alésage borgne axial (13) à son extrémité de portée cylindrique (11), ledit alésage débouchant à hauteur du tenon (12) et
- le second alésage du moyeu (24) et l'alésage borgne de l'axe (13) étant exactement alignés, lorsque la liaison arbre-moyeu est localisée, une tige de fixation (23), par exemple une tige filetée vissée, introduite dans les deux alésages précités (13, 24), assure le blocage axial de la liaison axe-moyeu.
